# EUROPÄISCHE PATENTSCHRIFT

(11) **EP 1 164 394 B1**
(45) Veröffentlichungstag und Bekanntmachung des Hinweises auf die Patenterteilung: **30.07.2003**
(21) Anmeldenummer: 00810519.9
(22) Anmeldetag: 15.06.2000
(51) Int. Cl.: G02B 6/38

(54) **Steckeranordnung für eine optische Einschub-Steckverbindung**
Connecting device for optical drawer connection
Dispositif connecteur pour une connexion optique à tiroir

(43) Veröffentlichungstag der Anmeldung: 19.12.2001
(73) Patentinhaber: Diamond SA, 6616 Losone (CH)
(72) Erfinder: De Marchi, Silverio, 6612 Ascona (CH)
(74) Vertreter: Wenger, René

(56) Entgegenhaltungen:
- EP-A- 0 916 978
- US-A- 5 542 015
- US-A- 5 930 426
- IWANO S -I ET AL: "MU.TYPE OPTICAL FIBER CONNECTOR SYSTEM" NTT REVIEW,JP,TELECOMMUNICATIONS ASSOCIATION, TOKYO, Bd. 9, Nr. 2, 1. März 1997 (1997-03-01), Seiten 63-71, XP000687069
- SHIMOJI N: "MPO OPTICAL BACKPLANE CONNECTOR" IEICE TRANSACTIONS ON COMMUNICATIONS,JP,INSTITUTE OF ELECTRONICS INFORMATION AND COMM. ENG. TOKYO, Bd. E80-B, Nr. 4, 1. April 1997 (1997-04-01), Seiten 535-539, XP000721827 ISSN: 0916-8516

## Beschreibung

Die Erfindung betrifft eine Steckeranordnung, für eine optische Einschub-Steckverbindung gemäss dem Oberbegriff von Anspruch 1. Derartige Steckeranordnungen dienen dazu, beispielsweise eine mit vorzugsweise mehreren optischen Steckern bestückte Platine derart im Gehäuse eines Geräts zu befestigen, dass die Stecker in korrespondierende Buchsen eingesteckt sind, welche an einer quer verlaufenden Gerätewand befestigt sind. Zur Vermeidung einer unnötigen Kraftübertragung auf die Tochterplatine und zur Kompensation von Masstoleranzen, sind die beiden Platinen im eingesteckten Zustand mechanisch voneinander entkoppelt.

Eine gattungsmässig vergleichbare Steckeranordnung ist bereits durch die EP-A-916 978 bekannt geworden, deren Offenbarung zum besseren Verständnis der vorliegenden Erfindung herangezogen wird. Gemäss diesem Stand der Technik ist das Schubelement eine U-förmige Gabel, deren federnde Schenkel mit einem Schubanschlag zusammenwirken, und welche damit eine überwindbare Abstützung definieren. Damit können sehr gute Ergebnisse erzielt werden, sofern in der Bewegungsebene der Gabel genügend Platz zur Verfügung steht. Bei miniaturisierten Steckern und bei engen Platzverhältnissen, d.h. bei einer hohen Packungsdichte von nebeneinander angeordneten Steckern auf einer bestimmten Länge, wird der Einsatz der U-förmigen Gabel jedoch schwierig, weil die seitlichen Schwenkbewegungen der Gabelschenkel nicht beliebig reduziert werden können.

Es ist daher eine Aufgabe der Erfindung, eine Steckeranordnung der eingangs genannten Art zu schaffen, welche auch bei starker Miniaturisierung der Bauteile eine zuverlässige Entkoppelung gewährleistet und welche leicht montierbar und einfach herstellbar ist. Diese Aufgabe wird erfindungsgemäss mit einer Steckeranordnung gelöst, welche die Merkmale im Anspruch 1 aufweist. Es hat sich dabei überraschend gezeigt, dass auch mit einer abgewinkelten Blattfeder als Schubelement hervorragende Ergebnisse erzielt werden können. Insbesondere erlaubt die Blattfeder ein Ausschwenken nach unten, was im Hinblick auf den seitlichen Platzbedarf der Stecker nicht störend ist. Die Blattfeder kann dabei der Tocherplatine und der Schubanschlag dem Steckerteil zugeordnet sein. Denkbar wäre aber auch eine kinematische Umkehr, d.h. eine Zuordnung der Blattfeder am relativ verschiebbaren Steckerteil.

Der Schubanschlag kann durch eine Materialschulter gebildet sein, wobei die Abwinklung nach der Überwindung der Materialschulter in eine Ausnehmung eingreift, in der sie in Einschubrichtung relativ um eine Strecke verschiebbar ist, welche dem maximal möglichen Entkoppelungsweg zwischen Mutterplatine und Tochterplatine entspricht. Durch das Eintauchen der Abwinklung in die Ausnehmung ist die Blattfeder im entkoppelten Zustand wieder völlig entspannt. Es wäre allerdings auch denkbar, dass die Blattfeder im entkoppelten Zustand gespannt bleibt und dass die Abwinklung in diesem Betriebszustand gegen eine Oberfläche des Steckerteils gepresst wird. Die dabei entstehende Reibung könnte beispielsweise zur Abbremsung der Entkoppelungsbewegung eingesetzt werden.

Die Materialschulter verläuft vorzugsweise etwa parallel zur Abwinklung und etwa im rechten Winkel zur Einschubrichtung. Trotz dieser Anordnung der Materialschulter wird die Blattfeder beim Ansteigen der Schubkraft zurückgebogen, weil auch die Abwinklung selber den Biegekräften unterliegt. Diese Anordnung von Materialschulter und Abwinklung hat den Vorteil, dass die Überwindung der Materialschulter praktisch schlagartig erfolgt, was den Einsteckvorgang erleichtert. Es wäre aber auch denkbar, Abwinklung und/oder Materialschulter in einem bestimmten Winkel zur Einschubrichtung anzuordnen, womit die erforderliche Schubkraft zur Überwindung der Materialschulter reduziert werden kann.

Die der Materialschulter zugewandte Seite der Ausnehmung kann zudem als Auflauframpe für die Abwinklung beim Zurückziehen des Steckers aus dem Buchsenteil ausgebildet sein. Dies bewirkt ersichtlicherweise, dass beim Reversieren der Bewegung die nötige Kraft zur Überwindung der Materialschulter kleiner ist.

Die Blattfeder kann als separates Biegeteil aus Metall ausgebildet sein, wobei diese im Bereich der Einspannstelle Verankerungsmittel aufweist. Das separate Biegeteil hat den Vorteil, dass die Federeigenschaften exakt auf den konkreten Fall abgestimmt werden können. Es wäre aber selbstverständlich auch denkbar, die Blattfeder unmittelbar in die Tochterplatine oder in ein der Platine zugeordnetes Gehäuseteil oder in das Steckergehäuse zu integrieren und beispielsweise aus Kunststoffmaterial herzustellen.

Die Blattfeder ist vorteilhaft in einem Einschubgehäuse gehalten, das wenigstens einen Führungsschacht für das Steckerteil bildet. Der Einsatz derartiger Einschubgehäuse ist bereits durch die eingangs erwähnte EP-A-916 978 bekannt geworden. Weitere Vorteile können nun noch dadurch erreicht werden, dass das Einschubgehäuse relativ zur Tochterplatine auf einer etwa im rechten Winkel zur Ebene der Tochterplatine und zur Einschubrichtung verlaufenden Ebene begrenzt verschiebbar gelagert ist. Diese schwimmende Lagerung hat den Vorteil, dass zwar in zwei Raumachsen eine Kompensation von Massungenauigkeiten möglich ist, nicht aber in der Einschubrichtung. Durch diese Kompensationsmöglichkeit wird ein Verkanten der Steckerteile vermieden.

Die Steckergehäuse müssen in der Einrastposition zugfest in den Buchsenteilen gehalten werden. Dies erfolgt auf an sich bekannte Weise über am Steckergehäuse angeordnete federnde Verriegelungselemente, welche in der Einrastposition in einer Hinterschneidung am Buchsenteil einrastbar sind. Für die Entriegelung ist daher ein Herausheben aus der Hinterschneidung erforderlich. Bei Einzelsteckverbindungen wird diese Bewegung manuell an einem entsprechenden Griffstück ausgeführt. Einzelheiten dazu können beispielsweise der EP-A-1 072 920 entnommen werden. Bei Einschub-Steckverbindungen mit mehreren nebeneinanderliegenden Steckern ist dies jedoch schwierig und die Entriegelungsbewegung bzw. die dazu erforderliche Kraft wird vorteilhaft aus der Rückzugsbewegung des Stekkers abgeleitet. Dazu weist das Verriegelungselement vorteilhaft einen Hebelarm auf, der mit wenigstens einer Führungskulisse am Einschubgehäuse derart zusammenwirkt, dass beim Zurückziehen des Steckergehäuses die Verriegelung lösbar ist. Eine derart gesteuerte Entriegelungsbewegung könnte auch an Einschub-Steckverbindungen mit konventionellen Einschubelementen realisiert werden.

Das Verriegelungselement kann als zweiarmiger Hebel ausgebildet sein, der lösbar auf dem Steckergehäuse fixierbar ist, wobei am einen Hebelarm wenigstens eine Sperrklinke, welche mit der Hinterschneidung zusammenwirkt und am anderen Hebelarm wenigstens ein Führungselement, welches mit der Führungskulisse zusammenwirkt, angeordnet ist. Der lösbar am Steckergehäuse fixierbare Hebel hat den Vorteil, dass konventionelle Steckergehäuse für die Verwendung in einer Einschub-Steckverbindung umgerüstet werden können.

Bei der Führungskulisse kann es sich um eine an einer Seitenwand des Führungsschachtes angeordnete Rampe handeln. Die Rampe kann dabei linear oder auch gekrümmt verlaufen.

Der Führungsschacht kann mit einer lösbaren Abdeckung abgedeckt sein, der ein Zentrierelement aufweist, das mit einem korrespondierenden Zentrierelement am Buchsenteil zusammenwirkt. Die separate Abdeckung vereinfacht einerseits die Herstellung des Einschubgehäuses und anderseits die Montage der einzelnen Steckerteile in den Führungsschächten. Die Anordnung des Zentrierelements an der Abdeckung ist vor allem aus Platzgründen vorteilhaft.

Das Buchsenteil hat vorzugsweise wenigstens eine Buchsenöffnung, die mit einer schwenkbaren Schutzklappe verschlossen ist, welche mittels einer das Buchsengehäuse und die Schutzklappe durchdringenden Achse angelenkt ist. Andere Gelenkverbindungen wären selbstverständlich ebenfalls möglich. Die Achse hat jedoch den Vorteil, dass sie gleichzeitig eine Feder aufnehmen kann, mit welcher die Schutzklappe in die Schliessposition vorgespannt ist. Zur seitlichen Fixierung der Achse kann diese im Bereich jeder Schutzklappe eine umlaufende Nut aufweisen. Ein Sporn an der Schutzklappe im Bereich der Auslenkung greift in diese Nut ein und fixiert damit die Achse. Dies ist möglich, weil die Schutzklappe ihrerseits im Buchsengehäuse seitlich begrenzt ist. Auch eine derartige Fixierung der Buchsenklappen könnte an einem konventionellen Buchsenteil für Einschub-Steckverbindungen oder auch für Einzel-Steckverbindungen eingesetzt werden.

Weitere Einzelmerkmale und Vorteile der Erfindung ergeben sich aus der nachstehenden Beschreibung eines Ausführungsbeispiels und aus den Zeichnungen. Es zeigen:
- Figur 1: einen Querschnitt durch eine erfindungsgemässe Einschub-Steckverbindung,
- Figur 2: eine perspektivische Darstellung von Buchsenteil und Steckerteil im ungesteckten Zustand,
- Figur 3: das Buchsenteil und das Steckerteil gemäss Figur 2 beim Einsteckvorgang,
- Figur 4: einen Längsschnitt durch einen Schlitten für die Aufnahme eines Steckergehäuses,
- Figur 5: einen Querschnitt durch die Ebene I-I beim Schlitten gemäss Figur 4,
- Figur 6: eine perspektivische Darstellung eines Einschubgehäuses vor der Bestückung mit Steckergehäusen,
- Figur 7: das Einschubgehäuse gemäss Figur 6 bei der Bestückung mit Steckergehäusen und vor der Endmontage,
- Figur 8: einen Längsschnitt durch eine Schutzklappe,
- Figur 9: eine Ansicht aus Pfeilrichtung II der Schutzklappe gemäss Figur 8,
- Figur 10: eine perspektivische Darstellung eines Buchsenteils vor der Montage, und
- Figuren 11 bis 13: verschiedene Sequenzen beim Herstellen einer Einschub-Steckverbindung.

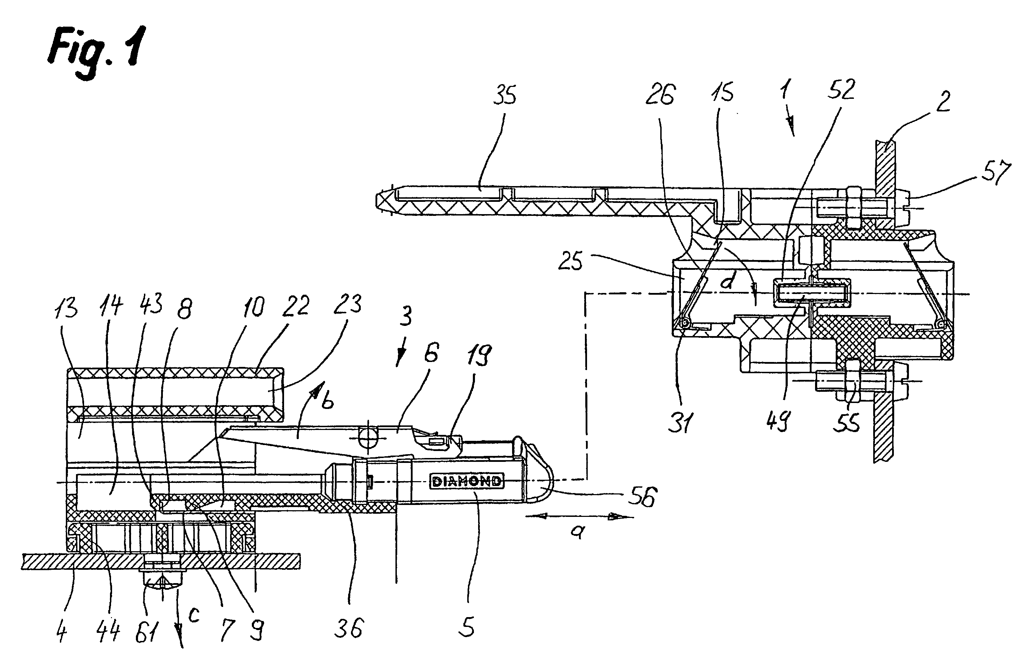

Anhand von Figur 1 werden zunächst die wesentlichen Bauteile der Steckeranordnung mit dem Steckerteil 3 und des Buchsenteils 1 erläutert. Demnach besteht die Steckeranordnung aus einem Einschubgehäuse 13, das an einem Sockelteil 44 auf einer Tocherplatine 4 montiert ist, und in welchem mehrere Steckerteile 3 in Pfeilrichtung a axial verschiebbar gelagert sind. Die einzelnen Steckerteile 3 sind auf einem Schlitten 36 fixiert, der im Einschubgehäuse 13 geführt ist. Jedem Schlitten ist ein eigener Führungsschacht 14 zugeordnet, der gegen oben mit einer Abdekkung 22 abgedeckt ist.

Das Steckerteil 3 verfügt über ein Steckergehäuse 5, in welchem auf an sich bekannte Weise an einer Druckfeder axial federnd ein Steckerstift gelagert ist. Die Stirnseite des Steckergehäuses ist zum Schutz des Steckerstifts mit einem Schutzdeckel 56 verschlossen, der erst beim Einsteckvorgang aufgeschwenkt und zurückgeschoben wird. Zur Fixierung des Steckergehäuses 5 im Buchsenteil 1 ist ein verriegelungselement 6 in der Form eines schwenkbaren Doppelhebels am Steckergehäuse befestigt, das über eine Sperrklinke 19 verfügt. Beim Erreichen der Einrastposition greift die Sperrklinke 19 hinter eine Hinterschneidung 15 am Buchsenteil 1 und verriegelt damit das Steckergehäuse 5 zugfest im Buchsenteil. Zum Lösen der Verriegelung muss der längere Hebelarm auf nachstehend noch genauer beschriebene Art und Weise in Pfeilrichtung b hochgeschwenkt werden. Weitere Einzelheiten des Steckeraufbaus können der eingangs erwähnten EP-A-1 072 920 entnommen werden, wobei dort allerdings ein Verriegelungselement dargestellt ist, das manuell zu betätigen ist. Die übrigen Bestandteile des Steckerteils, insbesondere auch des Steckerstifts und des Schutzdeckels sind jedoch identisch.

Ab Boden jedes Führungsschachtes 14 ist eine einseitig eingespannte Blattfeder 7 angeordnet, die an ihrem freien Ende mit einer Abwinklung 8 versehen ist. Diese Abwinklung wirkt beim Einsteckvorgang mit einem Schubanschlag 9 und beim Aussteckvorgang mit einem Zuganschlag 43 auf der Unterseite des Schlittens 36 zusammen. Beim Einsteckvorgang steigt die Schubkraft nach dem Erreichen der Rastposition soweit an, bis die Blattfeder 7 in Pfeilrichtung c nach unten ausschwenkt und die Abwinklung 8 den Schubanschlag 9 überwindet und in die in Einschubrichtung gesehen dahinter liegende Ausnehmung 10 eintaucht. Diese Ausnehmung begrenzt eine Bewegungsstrecke in Pfeilrichtung a, welche dem maximal möglichen Entkoppelungsweg entspricht.

Das Buchsenteil 1 ist als Durchführungskupplung ausgebildet, welche einseitig mit Hilfe von Befestigungsschrauben 57 an eine Mutterplatine 2 angeflanscht ist. Bei der Mutterplatine kann es sich beispielsweise um eine Gehäuserückwand handeln. In jedes Buchsenteil kann von beiden Seiten her je ein identisches Stekkerteil 3 eingesteckt werden, wobei deren Steckerstifte in einer exakt bearbeiteten Zentrierhülse 49 aufeinander zentriert und gegeneinander gepresst werden. In bestimmten Fällen wäre es allerdings auch denkbar, dass das Buchsenteil nur zum einseitigen Einstecken von Steckern bestimmt ist, und dass jedem eingesteckten Stecker ein optisches Modul zum Senden oder zum Empfangen von Licht zugeordnet ist.

Die einschubseitige Buchsenöffnung 25 ist mit einer schwenkbaren Schutzklappe 26 verschlossen, wobei sie mittels einer Feder 31 in Schliessstellung gehalten wird. Beim Einschieben des Steckerteils 3 wird die Schutzklappe 26 in Pfeilrichtung d weggeschwenkt.

Der Einschubvorgang zwischen der Steckeranordnung und dem Buchsenteil wird erleichtert durch einen am Buchsenteil angeordneten Führungsarm 35, der in einen Zentrierschacht 23 auf der Abdeckung 22 eingreift und damit eine lineare Führung gewährleistet. Im Übrigen ist das Buchsenteil jedoch nicht speziell für die erfindungsgemässe Steckeranordnung ausgebildet, sondern kann auch in Kombination mit konventionellen Einzelsteckern verwendet werden.

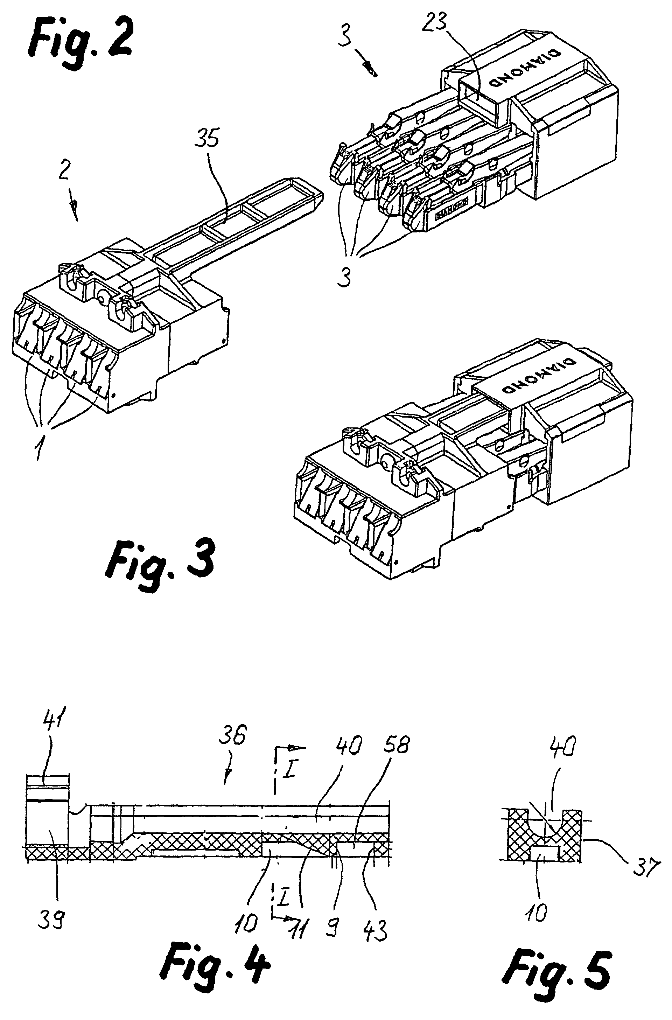

Wie aus den Figuren 2 und 3 ersichtlich ist, umfasst die im Ausführungsbeispiel dargestellte Einschub-Steckverbindung vier einzelne Steckerteile bzw. vier separate Buchsenteile. Ersichtlicherweise können aber nach dem gleichen Prinzip auch mehr oder weniger Steckverbindungen im gleichen Einschub hergestellt werden. Der seitliche Platzbedarf einer Einheit ist in jedem Fall sehr gering und ist nur wenig grösser als die Summe der Breite der Einzelstecker. Die Zentriermittel 23 bzw. 35 sind vorzugsweise bezogen auf die Breite einer Einheit etwa in der Mitte angeordnet.

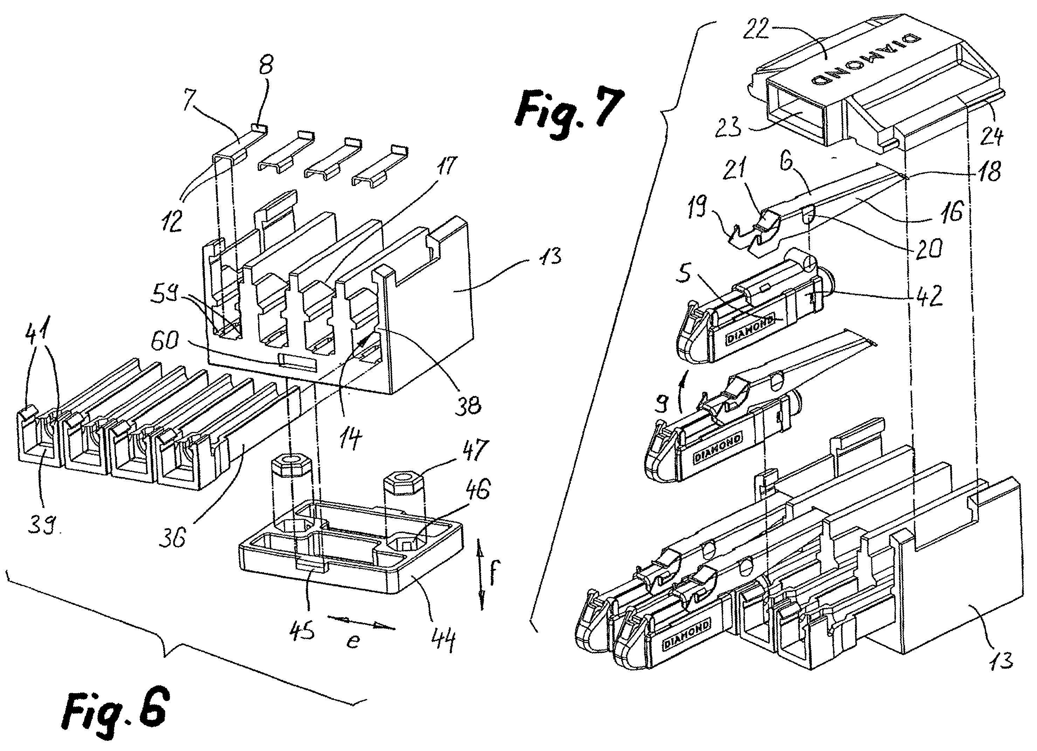

Aus den Figuren 4 bis 7 sind Einzelheiten über das Einschubgehäuse 13 und über das Zusammenwirken der einzelnen Teile ersichtlich. Die Figuren 4 und 5 zeigen zunächst den Aufbau eines Schlittens 36, dessen seitliche Schlittenkufen 37 in die einzelnen Führungsschächte 14 eingeschoben werden können, wobei die lineare Führung durch die Schlittenführungen 38 an den Seitenwänden der Führungsschächte gewährleistet ist (Figur 6). Jeder Schlitten verfügt über eine etwa U-förmige Lagerpfanne 39, die ein Steckergehäuse 5 an einem speziell dafür vorgesehenen Kragen 42 (Figur 7) aufnehmen kann. Zur Fixierung des Steckergehäuses dienen seitliche Halteklauen 41. Das zu jedem Steckerteil führende Lichtwellenleiterkabel ruht in einer ebenfalls U-förmigen Kabelaufnahme 40. Auf der Unterseite jedes Schlittens ist eine Materialschulter angeordnet, die den Schubanschlag 9 bildet. Gegen die Ausnehmung 10 hin ist diese Materialschulter als Auflauframpe 11 ausgebildet, um das Zurückbiegen der Abwinklung an der Blattfeder mit einem geringen Kraftaufwand zu ermöglichen. Die Breite der Vertiefung 10 ist etwas grösser als die Breite der Abwinklung an der Blattfeder. Der Zuganschlag 43 verläuft etwa parallel zum Schubanschlag 9 und begrenzt eine weitere Vertiefung 58 von etwa gleicher Tiefe und gleicher Breite wie die Vertiefung 10.

Wie aus Figur 6 ersichtlich ist, verfügen die einzelnen Blattfedern 7 über seitliche Haltezungen 12, welche in korrespondierende Schlitze 59 am Einschubgehäuse eingreifen. Durch die eingeschobenen Schlitten 36 werden die Blattfedern 7 auf diese Weise festgehalten und zugfest verankert.

An den Seitenwänden der Führungsschächte 14 sind linear verlaufende Rampen 17 angeordnet, welche der Steuerung der Verriegelungselemente 6 dienen.

Der Boden des Einschubgehäuses 13 ist als Hohlboden ausgebildet. Dieser Hohlboden nimmt das Sockelteil 44 auf, das an zwei Längsseiten mit je einer Schnappnase 45 versehen ist. Die Schnappnasen rasten in korrespondierende Öffnungen 60 im Hohlboden und zwar derart, dass das Sockelteil 44 sowohl seitlich in Pfeilrichtung e, als auch planparallel in Pfeilrichtung F mit Spiel gehalten ist. Daraus ergibt sich eine schwimmende Lagerung des Einschubgehäuses 13 auf der Tocherplatine 4. Das Sockelteil 44 selber ist mit der Tochterplatine starr verbunden. Dazu dienen Schraubenmuttern 47, die in Mutternlager 46 eingelegt werden können. Mit Hilfe von Befestigungsschrauben 61 (Figur 1) kann das Sockelteil 44 an der Tochterplatine 4 verschraubt werden.

Wie in Figur 7 dargestellt, werden zunächst konventionelle Stekkergehäuse 5 mit den speziell für die Einschub-Steckverbindung bestimmten Verriegelungselementen 6 bestückt. Diese sind als zweiarmige Hebel ausgebildet, die an Gelenköffnungen 20 auf das Steckergehäuse aufgeschnappt werden können. Am Ende des längeren Hebelarms 16 sind Führungselemente 18 angeordnet, die seitlich abstehen und die mit den Rampen 17 im Einschubgehäuse 13 zusammenwirken. Die Sperrklinken 19 sind am Ende des kürzeren Hebelarms angeordnet. Eine Feder 21 stützt sich im montierten Zustand auf der Oberseite des Steckergehäuses ab und spannt dadurch die Sperrklinken 19 in Einrastrichtung g vor.

Nachdem alle Schlitten 36 mit einem Steckergehäuse 5 bestückt sind, kann das Einschubgehäuse 13 mit der Abdeckung 22 verschlossen werden. Dies erfolgt wiederum über eine Schnappverbindung mit Hilfe der Rastleisten 24.

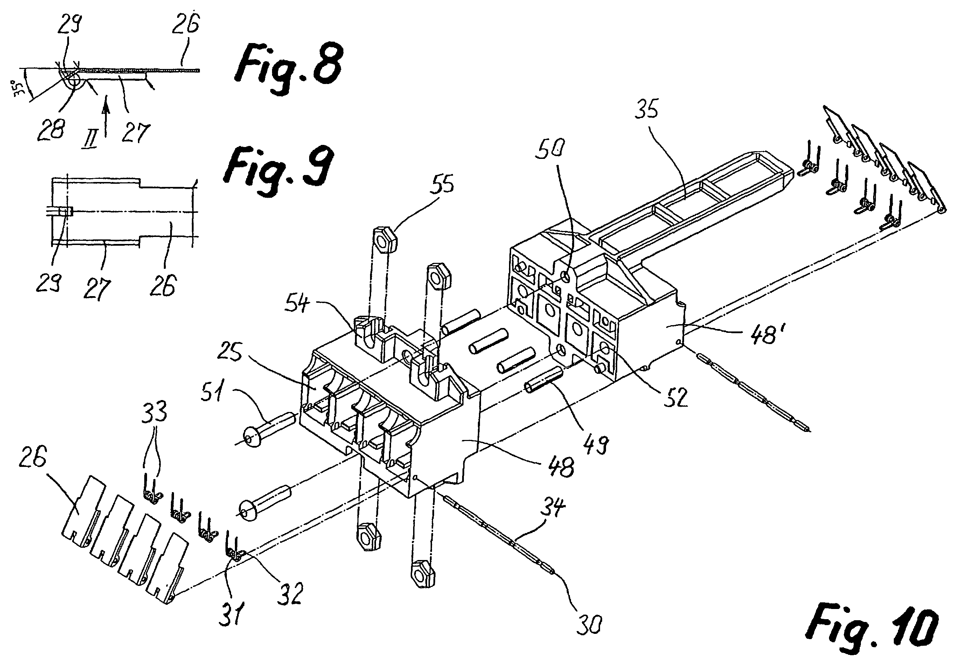

Weitere Einzelheiten des Buchsenteils sind aus Figur 10 ersichtlich. Es besteht aus den beiden Gehäusehälften 48 und 48', welche nach dem Einlegen der Zentrierhülsen 49 in die Hülsenlager 52 (siehe auch Figur 1) zusammengefügt werden. Dazu dienen Verbindungsbolzen 51, welche in Bolzenöffnungen 50 eingeschnappt und/oder eingeklebt werden.

An der Gehäusehälfte 48 sind wiederum Mutternlager 54 integriert, welche Schraubenmuttern 55 aufnehmen können. Diese dienen wie einleitend erwähnt der Befestigung des Buchsengehäuses 48, 48' an der Mutterplatine 2.

Jede Buchsenöffnung 25 ist mit einer Schutzklappe 26 verschlossen, wie sie in den Figuren 8 und 9 dargestellt ist. An den abgebogenen Seitenschenkeln 27 sind Öffnungen 28 für die Anlenkung am Buchsengehäuse angeordnet. Aus der Ebene der Schutzklappe 26 ist im Bereich dieser Anlenkstellen je ein Sporn 29 abgebogen. Die Anlenkung der Schutzklappen erfolgt über eine gemeinsame Lagerachse 30, welche sowohl die Öffnungen 28, als auch die einzelnen Schraubendrehfedern 39 durchdringt. Die Federn 31 verfügen über einen Stützfuss 32, der sich am Boden des Buchsengehäuses abstützt. Die Federschenkel 33 liegen an der Schutzklappe 26 an und pressen diese in die Schliessstellung. Der Sporn 29 jeder Schutzklappe 26 schnappt in eine umlaufende Nut 34 an der Lagerachse 30 und fixiert diese damit in der Seitenlage.

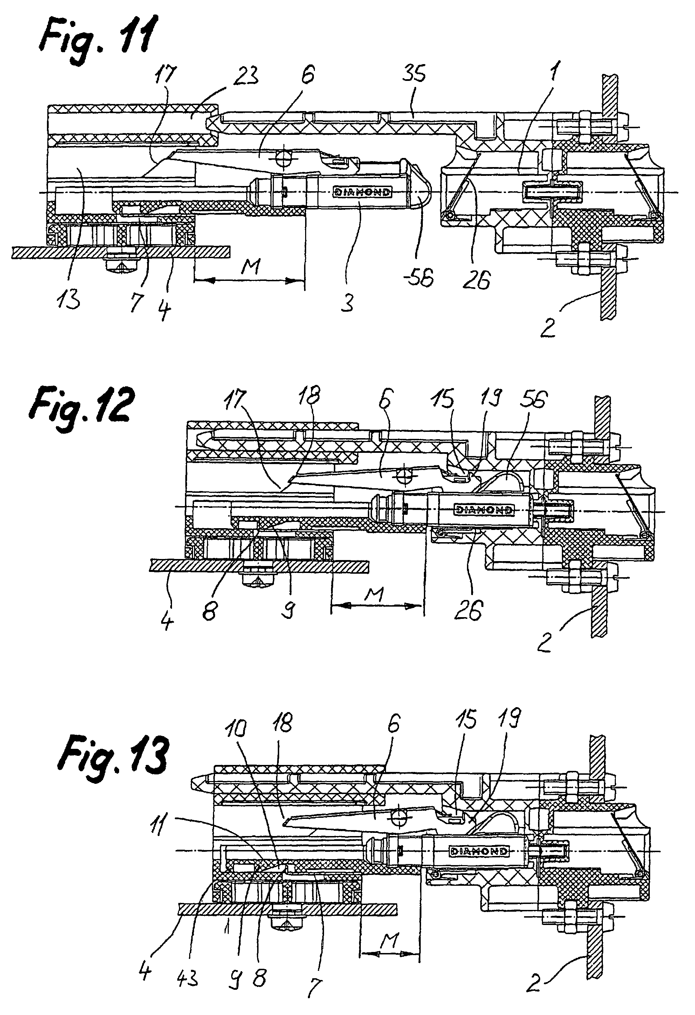

Anhand der Figuren 11 bis 13 werden die Bewegungsabläufe bei einem Einsteckvorgang erläutert. In der Position gemäss Figur 11 sind die Bauteile aufeinander ausgerichtet, indem der Führungsarm 35 bereits in den Zentrierschacht 23 eingreift. Das Steckerteil 3 ist relativ zum Einschubgehäuse 13 um das maximale Mass M ausgefahren. Sowohl die Schutzklappe 26 am Buchsenteil als auch der Schutzdeckel 56 am Steckerteil befinden sich in der Schliessstellung. Das Verriegelungselement 6 wird an der Rampe 17 in Entriegelungsposition vorgespannt.

Bei einem weiteren Vorschub der Tochterplatine 4 gegen die Mutterplatine 2 gemäss Figur 12 wird das Steckerteil 3 abgestützt am Schubanschlag 9 bzw. an der Abwinklung 8 der Blattfeder 7 in das Buchsenteil 1 eingeführt. Mit der dabei aufgewendeten Schubkraft wird einerseits die Schutzklappe 26 niedergedrückt und anderseits der Schutzdeckel 56 auf an sich bekannte Weise über eine hier nicht näher dargestellte Führung aufgeschwenkt und relativ zur Stirnseite des Steckers zurückgeschoben. Das Ausfahrmass M hat sich dabei um den Freilauf zwischen Schubanschlag 9 und Zuganschlag 43 reduziert. Dabei gibt die Rampe 17 das Verriegelungselement 6 soweit frei, dass beim Erreichen der Rastposition die Sperrklinken 19 an der Hinterschneidung 15 einrasten können.

Etwa gleichzeitig mit oder unmittelbar nach Erreichen der Rastposition bewirkt ein weiterer Anstieg der Schubkraft ein Ablösen der Abwinklung 8 vom Schubanschlag 9 durch Zurückweichen der Blattfeder 7 in einen dafür vorgesehenen Freiraum. Unmittelbar nach der Überwindung des Schubanschlags 9 taucht die Abwinklung in die Ausnehmung 10 ein, wodurch das Ausfahrmass M weiter reduziert wird. In dieser Ausnehmung ist das Einschubgehäuse 13 und damit die gesamte Tochterplatine 4 vom Steckerteil 3 und damit von der Mutterplatine 2 vollständig entkoppelt. Die Vorspannkraft der gegeneinander gepressten Steckerstifte wird dadurch vollständig durch die Verriegelung am Buchsengehäuse aufgenommen und kann sich nicht auf die Tochterplatine übertragen.

Beim Lösen der Einschub-Steckverbindung muss die Abwinklung 8 wiederum die Materialschulter des Schubanschlags 9 in umgekehrter Richtung überwinden. Dies wird durch die Auflauframpe 11 erleichtert. Bei einer Fortsetzung der Zugbewegung steuert die Rampe 17 das Verriegelungselement 6 derart, dass die Verriegelung am Buchsenteil gelöst wird und das Steckerteil aus dem Buchsenteil herausgezogen werden kann. Die Zugkraft wird dabei durch die Abwinklung an der Blattfeder über den Zuganschlag 43 auf das Steckerteil übertragen.

## Patentansprüche

1. Steckeranordnung für eine optische Einschub-Steckverbindung zwischen wenigstens einem Buchsenteil (1) auf einer Mutterplatine (2) und wenigstens einem Steckerteil (3) auf einer Tochterplatine (4) mit einem auf der Tochterplatine gehaltenen Steckergehäuse (5), sowie mit Rastmitteln (6) zum Einrasten des Steckergehäuses im Buchsenteil in einer Einrastposition, wobei die Tochterplatine nach Erreichen der Einrastposition von der Mutterplatine durch direkte oder indirekte Abstützung des Steckergehäuses an einem federnden Element entkoppelbar ist, dessen Federkraft die Abstützung bis zum Erreichen der Einrastposition aufrecht erhält und anschliessend bei fortgesetzter Schubbewegung selbständig löst, **dadurch gekennzeichnet, dass** das federnde Element (7) eine einseitig eingespannte, sich etwa in Einschubrichtung erstreckende Blattfeder aufweist, deren freies Ende eine Abwinklung (8) aufweist, wobei die Abwinklung (8) derart mit einem Schubanschlag (9) zusammenwirkt, dass nach Erreichen einer vorbestimmten Schubkraft der Schubanschlag durch Ausschwenken der Blattfeder überwindbar ist.

2. Steckeranordnung nach Anspruch 1, **dadurch gekennzeichnet, dass** die Blattfeder der Tochterplatine und der Schubanschlag dem Steckerteil zugeordnet ist.

3. Steckeranordnung nach Anspruch 1 oder 2, **dadurch gekennzeichnet, dass** der Schubanschlag durch eine Materialschulter gebildet wird, und dass die Abwinklung nach der Überwindung der Materialschulter in eine Ausnehmung (10) eingreift, in der sie in Einschubrichtung relativ um eine Strecke verschiebbar ist, welche dem maximal möglichen Entkoppelungsweg zwischen Mutterplatine und Tochterplatine entspricht.

4. Steckeranordnung nach Anspruch 3, **dadurch gekennzeichnet, dass** die Materialschulter etwa parallel zur Abwinklung und etwa im rechten Winkel zur Einschubrichtung verläuft und dass die der Materialschulter zugewandte Seite der Ausnehmung (10) als Auflauframpe (11) für die Abwinklung beim Zurückziehen des Steckerteils aus dem Buchsenteil ausgebildet ist.

5. Steckeranordnung nach einem der Ansprüche 1 bis 4, **dadurch gekennzeichnet, dass** die Blattfeder als separates Biegeteil aus Metall ausgebildet ist und dass sie im Bereich der Einspannstelle Verankerungsmittel (12) aufweist.

6. Steckeranordnung nach Anspruch 2 und einem der Ansprüche 3 bis 5, **dadurch gekennzeichnet, dass** die Blattfeder in einem Einschubgehäuse (13) gehalten ist, das wenigstens einen Führungsschacht (14) für das Steckerteil (3) bildet.

7. Steckeranordnung nach Anspruch 6, **dadurch gekennzeichnet, dass** das Einschubgehäuse (13) relativ zur Tochterplatine auf einer etwa im rechten Winkel zur Ebene der Tochterplatine und zur Einschubrichtung verlaufenden Ebene begrenzt verschiebbär gelagert ist.

8. Steckeranordnung, nach einem der Ansprüche 6 oder 7, **dadurch gekennzeichnet, dass** das Rastmittel ein am Steckergehäuse angeordnetes federndes Verriegelungselement ist, welches in der Einrastposition in eine Hinterschneidung (15) am Buchsenteil (1) einrastet, und dass das Verriegelungselement einen Hebelarm (16) aufweist, der mit wenigstens einer Führungskulisse (17) am Einschubgehäuse (13) derart zusammenwirkt, dass beim Zurückziehen des Steckergehäuses die Verriegelung lösbar ist.

9. Steckeranordnung nach Anspruch 8, **dadurch gekennzeichnet, dass** das Verriegelungselement als zweiarmiger Hebel ausgebildet ist, der lösbar auf dem Steckergehäuse (5) fixierbar ist, wobei am einen Hebelarm wenigstens eine Sperrklinke (19), welche mit der Hinterschneidung (15) zusammenwirkt, und am anderen Hebelarm wenigstens ein Führungselement (18), welches mit der Führungskulisse (17) zusammenwirkt, angeordnet ist.

10. Steckeranordnung nach Anspruch 8 oder 9, **dadurch gekennzeichnet, dass** die Führungskulisse eine an einer Seitenwand des Führungsschachtes (14) angeordnete Rampe ist.

11. Steckeranordnung nach einem der Ansprüche 6 bis 10, **dadurch gekennzeichnet, dass** der Führungsschacht mit einer lösbaren Abdeckung 22 abgedeckt ist, der ein Zentrierelement (23) aufweist, das mit einem korrespondierenden zentrierelement (35) am Buchsenteil zusammenwirkt.

12. Einschub-Steckverbindung mit einer Steckeranordnung nach einem der Ansprüche 1.bis 11 mit wenigstens zwei Steckerteilen und mit wenigstens zwei korrespondierenden Buchsenteilen, die in einem gemeinsamen Buchsengehäuse angeordnet sind.

## Claims

1. A plug arrangement for an optical insert plug-and-socket connection between at least one socket part (1) on a mother board (2) and at least one plug part (3) on a daughter board (4) with a plug housing (5) held on the daughter board, as well as with latching means (6) for latching the plug housing in the socket part in a latching position, wherein the daughter board after reaching the latching position may be decoupled from the mother board by direct or indirect support of the plug housing on a resilient push element whose spring force maintains the support until reaching the latching position and subsequently with a continued push movement releases it automatically, **characterised in that** the push element (7) is a leaf spring which is fixed at one side and which extends roughly in the insert direction and whose free end comprises an angled part (8), wherein the angled part (8) cooperates with a push abutment (9) in a manner such that after reaching a predetermined push force the push abutment is negotiable by way of the pivoting-out of the leaf spring.

2. A plug arrangement according to claim 1, **characterised in that** the leaf spring is allocated to the daughter board and the push abutment to the plug part.

3. A plug arrangement according to claim 1 or 2, **characterised in that** the push abutment is formed by a material shoulder, and that the angled part after negotiating the material shoulder engages into a recess (10) in which it in the insert direction is relatively displaceable by a distance which corresponds to the maxiumum possible decoupling path between the mother board and daughter board.

4. A plug arrangement according to claim 3, **characterised in that** the material shoulder runs roughly parallel to the angled part and roughly at right angles to the insert direction and that the side, of the recess (1), facing the material shoulder is designed as a run-up ramp (11) for the angled part on pulling back the plug part out of the socket part.

5. A plug arrangement according to one of claims 1 to 4, **characterised in that** the leaf spring is formed as a separate bent part of metal and that in the region of the fixing location it comprises anchoring means (12).

6. A plug connection according to claim 2 and one of claims 3 to 5, **characterised in that** the leaf spring is held in an insert housing (13) which forms at least one guide passage (14) for the plug part (3).

7. A plug arrangement according to claim 6, **characterised in that** the insert housing (13) is displaceably mounted in a limited manner relative to the daughter board on a plane which runs roughly at right angles to the plane of the daughter board and which runs to the insert direction.

8. A plug arrangement, in particular according to one of the claims 6 or 7, **characterised in that** the latching means is a resilient locking element which is arranged on the plug housing and which in the latching position latches into an undercut (15) on the socket part (1), and that the locking element comprises a lever arm (16) which cooperates with at least one guiding slide (17) on the insert housing (13) in a manner such that on pulling back the plug housing the locking is releasable.

9. A plug arrangement according to claim 8, **characterised in that** the locking element is designed as a two-armed lever which is releasably fixable on the plug housing, wherein on one lever arm there is arranged at least one detent pawl (1) which cooperates with the undercut (17), and on the other lever arm there is arranged at least one guide element (18) which cooperates with the guiding slide (17).

10. A plug arrangement according to claim 8 or 9, **characterised in that** the guiding slide is a ramp arranged on a lateral wall of the guide passage (14).

11. A plug arrangement according to one of claims 6 to 10, **characterised in that** the guiding slide is covered by a releasable cover (22) which comprises a centering element (23) which cooperates with a corresponding centering element (35) on the socket part.

12. An insert plug-and socket connection with a plug arrangement according to one of the claims 1 to 11 with at least two plug parts and with at least two corresponding socket parts which are arranged in a common socket housing.

## Revendications

1. Dispositif de connexion pour une jonction optique embrochable entre au moins une partie formant douille (1) située sur une platine mère (2) et au moins une partie formant fiche mâle (3) située sur une platine fille (4) et comprenant un boîtier de fiche mâle (5) tenu sur la platine fille, ainsi que des moyens d'encliquetage (6) destinés à encliqueter le boîtier de fiche mâle dans la partie formant douille dans une position d'encliquetage, la platine fille pouvant être désaccouplée de la platine mère lorsque la position d'encliquetage a été atteinte, par un appui direct ou indirect du boîtier de fiche mâle sur un élément élastique, dont la force élastique maintient l'appui jusqu'à ce que la position d'encliquetage soit atteinte et le relâche ensuite automatiquement si le mouvement de poussée est poursuivi, **caractérisé en ce que** l'élément élastique (7) présente un ressort lame encastré d'un côté, qui s'étend à peu près dans la direction de l'emmanchement et dont l'extrémité libre possède une partie coudée (8), la partie coudée (8) coopérant avec une butée de poussée (9) de telle manière que, lorsqu'une force de poussée prédéterminée a été atteinte, la butée de poussée puisse être franchie par un fléchissement du ressort lame.

2. Dispositif de connexion selon la revendication 1, **caractérisé en ce que** le ressort lame de la platine fille et la butée de poussée sont combinés à la partie formant fiche mâle.

3. Dispositif de connexion selon la revendication 1 ou 2, **caractérisé en ce que** la butée de poussée est formée par un épaulement de matière et **en ce qu'**après avoir surmonté l'action de l'épaulement de matière, la partie coudée s'engage dans un évidement (10) dans lequel elle peut se déplacer relativement dans la direction de l'emmanchement sur une distance qui correspond à la course de désaccouplement maximale possible entre la platine mère et la platine fille.

4. Dispositif de connexion selon la revendication 3, **caractérisé en ce que**
l'épaulement de matière s'étend à peu près parallèlement à la partie coudée et à peu près à angle droit par rapport à la direction d'emmanchement et **en ce que** le côté de l'évidement (10) qui est dirigé vers l'épaulement de matière constitue une rampe de montée (11) pour la partie coudée lorsqu'on retire la partie formant fiche mâle de la partie formant douille.

5. Dispositif de connexion selon l'une des revendications 1 à 4, **caractérisé en ce que** le ressort lame est constitué par une pièce pliée distincte en métal, et **en ce qu'**il présente des moyens d'ancrage (12) dans la région de la zone d'encastrement.

6. Dispositif de connexion selon la revendication 2, et l'une des revendications 3 à 5, **caractérisé en ce que** le ressort lame est tenu dans un boîtier d'emmanchement (13) qui forme au moins une gaine de guidage (14) pour la partie formant fiche mâle (3).

7. Dispositif de connexion selon la revendication 6, **caractérisé en ce que** le boîtier d'emmanchement (13) est monté de façon à pouvoir se déplacer en translation dans une mesure limitée par rapport à la platine fille, sur un plan qui s'étend à peu près à angle droit par rapport au plan de la platine fille et par rapport à la direction d'emmanchement.

8. Dispositif de connexion selon l'une quelconque des revendications 6 ou 7, **caractérisé en ce que** le moyen d'encliquetage est un élément de verrouillage élastique qui est monté sur le boîtier de fiche mâle et qui, dans la position d'encliquetage, s'enclenche dans une contre-dépouille (15) prévue sur la partie formant douille (1), et **en ce que** l'élément de verrouillage présente un bras de levier (16) qui coopère avec au moins une coulisse de guidage (17) prévue sur le boîtier d'emmanchement (13) de telle manière que le verrouillage puisse être libéré lorsqu'on retire le boîtier de fiche mâle.

9. Dispositif de connexion selon la revendication 8, **caractérisé en ce que** l'élément de verrouillage est constitué par un levier à deux bras qui peut être fixé de façon séparable sur le boîtier de fiche mâle (5), au moins un cliquet de blocage (19) qui coopère avec la contre-dépouille (15) étant disposé sur un bras de levier, et au moins un élément de guidage (18) qui coopère avec la coulisse de guidage (17) étant disposé sur l'autre bras de levier.

10. Dispositif de connexion selon la revendication 8 ou 9, **caractérisé en ce que** la coulisse de guidage est une rampe disposée contre une paroi latérale de la gaine de guidage (14).

11. Dispositif de connexion à emmanchement selon l'une des revendications 6 à 10, **caractérisé en ce que** la gaine de guidage peut être recouverte par un recouvrement amovible (22) présentant un élément de centrage (23) qui coopère avec un élément de centrage correspondant (35) porté par la partie formant douille.

12. Jonction embrochable à emmanchement comprenant un dispositif de connexion selon l'une des revendications 1 à 11 qui comprend au moins deux parties formant fiches mâles et au moins deux parties formant douilles correspondantes qui sont disposées dans un boîtier de douille commun.
